# EUROPÄISCHE PATENTSCHRIFT

(11) **EP 2 343 955 B1**
(45) Veröffentlichungstag und Bekanntmachung des Hinweises auf die Patenterteilung: **19.07.2017**
(21) Anmeldenummer: 10197421.0
(22) Anmeldetag: 30.12.2010
(51) Int. Cl.: H05B 33/08, H05B 37/02, G09F 21/04

(54) **Verfahren zur Steuerung der Leuchtdichte einer Beleuchtungseinrichtung für ein Anzeigeelement und Anzeigevorrichtung für Fahrzeuge, die das Anzeigeelement enthält**
Method for controlling the luminance of a lighting device for a display element and display device for vehicles containing the display element
Procédé de commande de la luminance d'un dispositif d'éclairage pour un élément d'affichage et dispositif d'affichage pour véhicules contenant l'élément d'affichage

(30) Priorität: 30.12.2009 DE 102009055425
(43) Veröffentlichungstag der Anmeldung: 13.07.2011
(73) Patentinhaber: AEG Gesellschaft für moderne Informationssysteme mbH, 89077 Ulm (DE)
(72) Erfinder: Bayrle, Reiner, 89129 Langenau (DE); Bader, Otto, 88447 Warthausen (DE); Hagmann, Jörg, 89168 Oberstotzingen (DE)
(74) Vertreter: Winter, Brandl, Fürniss, Hübner, Röss, Kaiser, Polte - Partnerschaft mbB

(56) Entgegenhaltungen:
- US-A1- 2002 158 583
- US-A1- 2006 038 831
- US-A1- 2006 055 630
- US-A1- 2007 008 096
- US-A1- 2009 251 909
- US-B1- 6 915 209

## Beschreibung

Die vorliegende Erfindung betrifft ein Verfahren zur Steuerung der Leuchtdichte einer Beleuchtungseinrichtung für ein Anzeigeelement und eine Anzeigevorrichtung für Fahrzeuge, die das Anzeigeelement enthält. Die vorliegende Erfindung betrifft insbesondere Anzeigevorrichtungen für öffentliche Verkehrsmittel wie Busse oder Bahnen.

Anzeigevorrichtungen in Bussen oder Bahnen werden derzeit im Wesentlichen in drei Systemen angeboten, die sich z. B. in der Qualität des Schriftbildes und somit der Lesbarkeit insbesondere bei ungünstigen Umgebungslichtverhältnissen, der Lebensdauer und dem Energieverbrauch unterscheiden: Leuchtdioden (LED) -, Flüssigkristall (LCD) - und Flip-Dot-Matrix-Anzeigen. Allen gemeinsam ist, dass das Schriftbild aus individuell ansteuerbaren, in einer Matrix angeordneten Elementen aufgebaut wird, wobei diese Elemente entweder selbstleuchtend (LED) oder nicht selbstleuchtend (LCD; Flip-Dot-Matrix) sind. Bei Flip-Dot-Matrix-Anzeigen werden Anzeigeplättchen, die eine schwarze und eine gefärbte, meist gelbe Seite besitzen, mit Hilfe von kleinen Spulen elektromagnetisch um eine Achse gedreht, so dass entweder die schwarze oder die gefärbte Seite sichtbar wird. Diese Form der Anzeige ist, obgleich sie durch den Einsatz von LED-Beleuchtungen wieder Marktanteile gewinnen konnte, im Vergleich zu LCD- und LED-Anzeigen relativ unbedeutend geworden.

Bei LCD-Anzeigen wird elektronisch die Lichtdurchlässigkeit der Elemente durch Anlegen einer Spannung an darin enthaltene Flüssigkristalle gesteuert; sie sind daher im Gegensatz zur LED auf eine Hinterleuchtung angewiesen. LCD-Anzeigen haben gegenüber LED-Anzeigen jedoch einige Vorteile wie etwa eine hohe Auflösung, einen gute Kontrast selbst bei ungünstigen Lichtverhältnissen, einen sehr guten Einblickwinkel, einen geringen Energieverbrauch und eine lange Lebensdauer. Doch obwohl der Energieverbrauch "relativ" niedrig ist, wird auch hier an noch günstigeren und effizienteren Lösungen gearbeitet, wobei neue Entwicklungen nicht auf Kosten der Lesbarkeit gehen dürfen, die insbesondere im öffentlichen Verkehr oberste Priorität haben muss.

Aus der US 2002/015853 A1 ist es bekannt, Farbton, Farbsättigung und auch Helligkeit einer Anzeigevorrichtung oder Beleuchtungsvorrichtung abhängig von empfangenen Informationssignalen zu machen. Ein Anwendungsgebiet für den Gegenstand der US 2002/015853 A1 können Beleuchtungssysteme für Fahrzeuge sein, beispielsweise können LCD-Bildschirmanzeigen oder dergleichen angesteuert werden. Die Informationssignale können beispielsweise durch elektromagnetische Übertragung, Funkübertragung oder sonstige drahtlose Kommunikationswege übermittelt werden.

Die Offenlegungsschrift US 6, 915,209 B1 offenbart ein Verfahren zum Steuern einer Anzeigevorrichtung für Fahrzeug. In D6 zeigt die Anzeigevorrichtung die aktuelle Position des Fahrzeugs, die aus einem GPS-Signal gewonnen wird.

Es ist eine Aufgabe der vorliegenden Erfindung, ein energiesparendes Verfahren zur Steuerung der Leuchtdichte für ein Anzeigeelement einer Anzeigevorrichtung für Fahrzeuge, insbesondere Busse oder dergleichen, sowie eine Anzeigevorrichtung, die nach diesem Verfahren arbeitet, bereitzustellen.

Diese Aufgabe wird durch die Merkmale der Ansprüche 1 bzw. 5 gelöst. Weitere vorteilhafte Ausgestaltungen sind in den Unteransprüchen definiert.

Gemäß der vorliegenden Erfindung, wie sie in Anspruch 1 definiert ist, erfolgt die Änderung der Leuchtdichte in Abhängigkeit von der jeweiligen Position des Fahrzeugs.

Erfindungsgemäß sind die beiden Eckpfeiler Energieersparnis und Lesbarkeit, die sich zunächst auszuschließen scheinen, dadurch gleichzeitig realisiert, dass die Anzeigevorrichtung situationsadaptiv angesteuert wird, wobei die Erkenntnis zugrunde gelegt ist, dass der Ablesbarkeit - und damit der Helligkeit der Hinterleuchtung durch die Beleuchtungseinrichtung - nicht in allen Betriebszuständen die gleiche Bedeutung zukommt. Insbesondere ist erfindungsgemäß in Situationen (im Folgenden kurz als "primäre Informationssituationen" bezeichnet), in denen die Information durch die Anzeigevorrichtung besonders wichtig ist, eine gegenüber anderen Situationen (im Folgenden kurz als "sekundäre Informationssituation" bezeichnet), in denen diese Information weniger relevant ist, erhöhte Ablesbarkeit gewährleistet. Erfindungsgemäß wird somit die Position des Fahrzeugs erfasst und die Anzeigeelemente der Anzeigevorrichtung entsprechend dem Erfassungsergebnis angesteuert. Die unterschiedliche Bedeutung, die der Ablesbarkeit der Anzeigevorrichtung zukommt, ist, wie es oben erwähnt ist, abhängig von dem jeweiligen Betriebszustand des Fahrzeugs, sie ist aber vorteilhafterweise in allen Situation mit Ausnahme von Betriebsstillständen von Null verschieden. Das bedeutet, dass die Anzeigevorrichtung in allen Betriebszuständen mit Ausnahme von Betriebsstillständen hinterleuchtet ist. Betriebsstillstände sind die einzigen Betriebszustände, in denen die Hintergrundbeleuchtung gleich Null ist; sie sind nachfolgend ausgenommen. Die Hinterleuchtung ist somit nie gleich Null, so dass die Anzeigevorrichtung stets - wenn auch in Abhängigkeit von dem Betriebszustand unterschiedlich deutlich - ablesbar ist.

Wenigstens zwei sinnvolle Interpretation dessen, was primäre und sekundäre Informationssituationen sind, sind erfindungsgemäß denkbar.
Fall (a): Eine primäre Informationssituation liegt zum Beispiel bei Rangiermanövern an Haltestellen, Busbahnhöfen etc. vor, während eine sekundäre Informationssituation zum Beispiel bei ,normalen' Fahrten im Straßenverkehr zwischen den oben genannten Bereichen vorliegt. Hier wird davon ausgegangen, dass das vollständige Erkennen der Anzeige zum Beispiel eines vorbeifahrenden Busses, in den nicht eingestiegen werden kann, weil er sich in großer Entfernung zu einer Haltestelle befindet, von untergeordneter Bedeutung ist. Es kann in solchen Situationen zum Beispiel genügen, die Nummer des Busses abzulesen zu können.
Fall (b): Umgekehrt zu Fall (a). Insbesondere ist es denkbar, dass die Anzeigevorrichtung schon aus der Entfernung gut lesbar sein soll, während die Helligkeit verringert werden kann, wenn sich das Fahrzeug zum Beispiel an einer Haltstelle befindet. Dort ist aufgrund des kurzen Abstandes eines Fahrgastes zu dem Fahrzeug ein Lesen des Anzeigeinhaltes schon bei einer geringeren Helligkeit möglich.

Implizit geht Anspruch 1 der vorliegenden Erfindung natürlich davon aus, dass die Position zunächst erfasst wird. Das Erfassungsergebnis bildet die Entscheidungsgrundlage für die Art der Ansteuerung des Anzeigeelements der Anzeigevorrichtung.

Die Helligkeit (Leuchtdichte), die mit der Lesbarkeit positiv korreliert, kann in der sekundären Informationssituation gegenüber der primären Informationssituation verringert werden, da aufgrund des Verbots eines Fahrgastwechsels in dieser Situation die Lesbarkeit zwar nicht unwichtig, aber als von untergeordneter Bedeutung eingestuft wird, wie es oben bereits ausgeführt ist. Umgekehrt formuliert: An Haltestellen, Busbahnhöfen etc. wird eine optimale Lesbarkeit gewährleistet. Daher ist dort die Leuchtdichte der Anzeigevorrichtung am größten; dort, wo sie als weniger notwendig eingestuft wird (sekundäre Informationssituation), wird erfindungsgemäß auf einen Energiesparmodus umgeschaltet.

Wird - was nicht unmittelbar Gegenstand der vorliegenden Erfindung ist - der Bewegungszustand als Betriebszustand erfasst, kann dieser durch Erfassen der Beschleunigung des Fahrzeugs ermittelt bzw. durch die erfassten Beschleunigungswerte gleichsam definiert werden. Vorteilhafterweise wird der Bewegungszustand (Beschleunigungszustand) des Fahrzeugs an mehreren Stellen, z. B. sowohl an der linken als auch an der rechten Seite des Fahrzeugs ermittelt, so dass sowohl eine (positive oder negative) Tangential- als auch eine Radialbeschleunigung (Kurvenfahrt) erkannt werden kann. Dabei spannen wenigstens zwei vorzugsweise orthogonale Einheitsvektoren b̅ₓ, b̅_{y} ein Beschleunigungs-Koordinatensystem in der Ebene auf, das zum Beispiel entlang einer Längsrichtung bzw. Querrichtung des Fahrzeugs ausgerichtet ist. Dieses Koordinatensystem kann um eine z-Komponente b̅_{z} ergänzt werden.

Es ist zu beachten, dass direkt aus den erfassten Beschleunigungswerten nicht immer zwischen primären und sekundären Informationssituationen differenziert werden kann, da sich diesbezüglich ein Anhalten an einer Ampel und ein Anhalten an einer Bushaltestelle nicht eineindeutig unterscheiden. Da jedoch gewährleistet sein muss, dass die Leuchtdichte in der primären Informationssituation ausreichend hoch ist, wird erfindungsgemäß eine Informationstoleranz zugelassen, wonach in nicht eindeutigen Fällen sekundäre Informationssituationen als primäre interpretiert werden. Der umgekehrte Fall ist nicht zugelassen. Diese Informationstoleranz ist somit ein Sicherheitsfaktor, der dem oben formulierten Ziel der Energieersparnis und Lesbarkeit nicht entgegensteht. Um diese Problematik zu umgehen, kann die Leuchtdicht der Anzeige in Abhängigkeit von der geographischen Lage des Fahrzeugs erhöht oder erniedrigt werden. Die geographische Lage lässt sich mittels eines GPS-Systems ermitteln. Das GPS-System erlaubt vorteilhafterweise eine erweiterte Differenzierung zwischen städtischer und ländlicher Umgebung insofern als die jeweils einzustellenden Leuchtdichten sowohl für die primäre als auch für die sekundäre Informationssituation in städtischer Umgebung aufgrund der zahlreichen, dort vorhandenen Lichtquellen höher als in ländlicher Umgebung sind. Bezeichnet man z. B. die Leuchtdichten für die primäre und sekundäre Informationssituation in städtischer Umgebung mit L_{p,Stadt} bzw. L_{s,Stadt} und die für die primäre und sekundäre Informationssituation in ländlicher Umgebung mit L_{p,Land} bzw. L_{s,Land}, so gelten folgende Beziehungen: L_{p,Stadt} > L_{p,Land} und L_{s,Stad} > L_{s,Land}. Definitionsgemäß gilt L_{p,Stadt} > L_{s,Stadt} und L_{p,Land} > L_{s,Land}.

Vorteilhafterweise wird aus der erfassten Beschleunigung durch einmalige und zweimalige Integration die Geschwindigkeit bzw. der Weg errechnet, so dass bei bekannter Startposition zu jedem Zeitpunkt die Momentanposition ermittelt werden kann. So kann durch Integration aus Beschleunigungswerten b₁ · b̅ₓ, b₂ · b̅_{y} und gegebenenfalls b₃ · b̅_{z} die Geschwindigkeit v̅ des Fahrzeugs ermittelt werden. Da der Betrag |v̅| der Geschwindigkeit bei gleicher Beschleunigung in der primären und der sekundären Informationssituation verschieden sein kann, kann dann zwischen diesen Situation differenziert werden. Insbesondere erlaubt der Betrag der Geschwindigkeit auch eine Differenzierung zwischen dem Stillstand des Fahrzeugs und einer gleichförmigen, geradlinigen Bewegung, wobei in beiden Fällen die Beschleunigung des Fahrzeugs per definitionem Null ist. Durch Berechnen der Wegstrecke und Abgleich mit entsprechenden elektronischen Karten können alle erfassten Beschleunigungssituationen, die keiner Haltestelle zugeordnet werden können, sicher als sekundäre Informationssituationen identifiziert werden. Auf diese Weise können unnötige An-/Ausschaltvorgänge der Hinterleuchtung vermieden werden.

Es kann zwischen einem ersten und einem zweiten Bewegungszustand unterschieden werden, denen jeweils eine Beleuchtungsstärke zugeordnet ist, und es kann dem ersten und zweiten Bewegungszustand die Geschwindigkeit |v̅| = 0 bzw. |v̅| > 0 zugeordnet werden. Die vorliegende Erfindung ist jedoch nicht auf zwei Zustände begrenzt, es können beliebig viele Zustände definiert werden. Ferner ist es möglich, einen Zustand nicht durch einen Geschwindigkeitswert, sondern einen Geschwindigkeitsbereich zu definieren. Darüber hinaus kann ein Bewegungszustand durch mehrere Parameter, z. B. {aₓ, a_{y}, a_{z}} oder {daₓ/dt, da_{y}/dt, da_{z}/dt}, definiert sein.

Gemäß der vorliegenden Erfindung wie sie in Anspruch 5 definiert ist, umfasst eine Anzeigevorrichtung für Fahrzeuge ein Anzeigeelement, eine Beleuchtungseinrichtung zur Beleuchtung des Anzeigeelements und eine Steuereinrichtung zur Steuerung der Leuchtdichte der Beleuchtungseinrichtung in Abhängigkeit von Daten betreffend die jeweilige Position des Fahrzeugs. Die Anzeigevorrichtung ist bevorzugt ein eigenständiges Gerät, das nicht auf Daten von weiteren Bordsystemen angewiesen ist. Dies erleichtert die Diagnose und die Reparatur im Falle eines Defekts und führt insbesondere im Vergleich mit Anzeigevorrichtungen, die in proprietäre Bordsysteme eingebunden sind, zu einer verkürzten Reparaturzeit.

Eine Sensorvorrichtung zur Erfassung des Bewegungszustandes des Fahrzeugs, wenn der Bewegungszustand als Betriebszustand erfasst wird, was nicht unmittelbar Gegenstand der vorliegenden Erfindung ist, kann wenigstens einen Trägheitssensor umfassen. Da der Trägheitssensor eine Beschleunigung erfasst und der Bewegungszustand auf der Grundlage der Beschleunigung ermittelt bzw. definiert wird, hat die erfindungsgemäße Anzeigevorrichtung z. B. gegenüber GPS-Systemen den Vorteil, nicht von externen Signalen abhängig zu sein und damit auch sicher dort zu funktionieren, wo GPS-Signale nicht zuverlässig empfangen werden, z. B. in Häuserschluchten. Vorteilhafterweise umfasst die Sensoreinrichtung einen Trägheitssensor pro Raumrichtung x, y, z, so dass sich aus den Erfassungsdaten eine Trajektorie im dreidimensionalen Raum rückrechnen lässt. Durch Vergleich mit topografischen Karten, in denen Haltestellen eingetragen sind, lassen sich so, wie es weiter oben schon erwähnt ist, Haltesituationen z. B. an Ampeln von Haltesituationen an Haltestellen unterscheiden, da erstere aufgrund der gewonnenen Streckeninformation als sekundäre Informationssituationen identifiziert werden. Vorzugsweise sind an mehreren Positionen des Fahrzeugs, z. B. an einem vorderen Abschnitt und an einem hinteren Abschnitt, x,y,z-Beschleunigungssensoren angeordnet. Gleiche Signale zeigen hierbei eine geradlinig-beschleunigte Fahrt, unterschiedliche eine Kurvenfahrt an. Insbesondere ist bei starkem Lenkradeinschlag die Beschleunigung am vorderen Ende des Fahrzeugs sehr viel größer als am hinteren Ende.

Weitere Fehlerquellen können durch eine Filtereinrichtung zum Ausfiltern von Fahrzeugvibrationen ausgeschlossen werden. Ein solcher Filter ist vorzugsweise als Frequenzfilter, wobei höhere Frequenzen als den Fahrzeugvibrationen zugehörig bestimmt und zur Beurteilung des Bewegungszustandes des Fahrzeugs, der Rückschlüsse auf die primäre oder sekundäre Informationssituation zulässt, nicht herangezogen werden.

Die Sensorvorrichtung kann einen Geschwindigkeitssensor aufweisen, mit dessen Hilfe die Geschwindigkeitsdaten erfasst werden können. Die erfassten Geschwindigkeitsdaten können vorteilhafterweise mit den aus den Beschleunigungsdaten errechneten Geschwindigkeitsdaten und/oder mit GPS-Daten verglichen werden, um die Korrektheit der Daten zu überprüfen. Vorteilhafterweise kann an wohl definierten Orten die Position rückgesetzt werden, wie dies bei anderen Streckenerfassungssystemen in Bussen üblich ist.

Die oben genannten und weitere Eigenschaften und Vorteile der vorliegenden Erfindung sind aus der nachfolgenden ausführlichen Beschreibung mit Bezug auf die beigefügten Zeichnung ersichtlich.

Es zeigt:
Fig. 1 ein Blockschaltbild zur Ansteuerung einer Anzeigevorrichtung gemäß eines ersten Beispiels der vorliegenden Erfindung;
Fig. 2 ein Blockschaltbild zur Ansteuerung einer Anzeigevorrichtung gemäß eines zweiten Beispiels der vorliegenden Erfindung;
Fig. 3 ein Blockschaltbild zur Ansteuerung einer Anzeigevorrichtung gemäß eines dritten Beispiels der vorliegenden Erfindung; und
Fig. 4 ein Blockschaltbild zur Ansteuerung einer Anzeigevorrichtung gemäß eines vierten Beispiels der vorliegenden Erfindung.

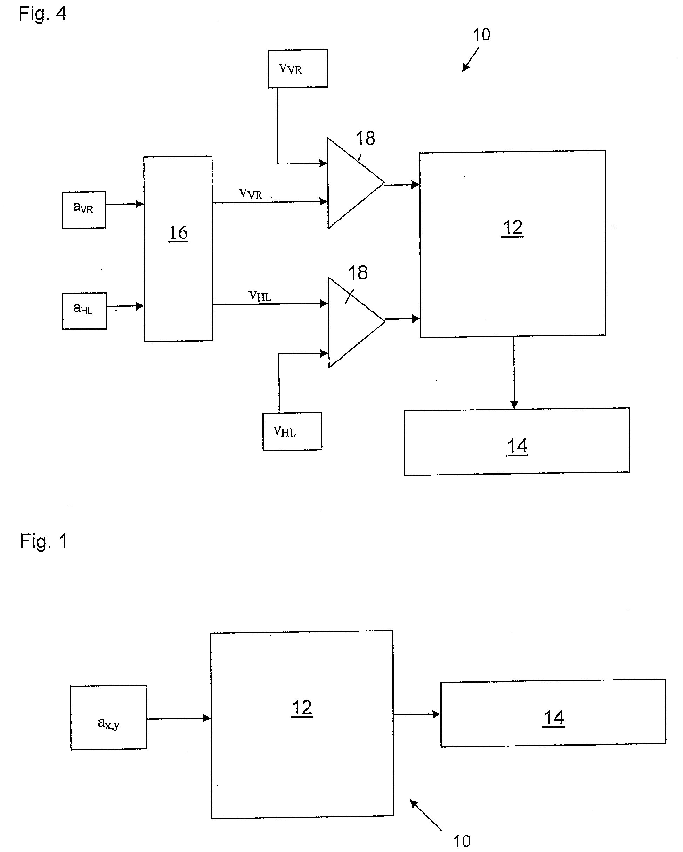

Wie es in Fig. 1 gezeigt ist, erhält eine Fahrzielanzeige 14 eines Fahrzeugs (nicht gezeigt) ein Steuersignal von einem Steuergerät 12, das Signale von einem einzigen x,y-Beschleunigungssensor a_{x,y} empfängt, der Beschleunigungen in der x,y-Ebene erfasst, wobei die positive x-Achse in Fahrtrichtung und die y-Achse senkrecht dazu ausgerichtet ist. Die Steuersignale schalten die Helligkeit der Fahrzielanzeige 14 je nach Umgebungslichtstärke in einen Energiesparmodus mit einer Leuchtdichte von z. B. 1000 cd/m², wenn eine sekundäre Informationssituation erfasst wird, und in einen Normalanzeigemodus von z. B. 1500-2000 cd/m², wenn eine primäre Informationssituation erfasst wird (bei Tageslicht).

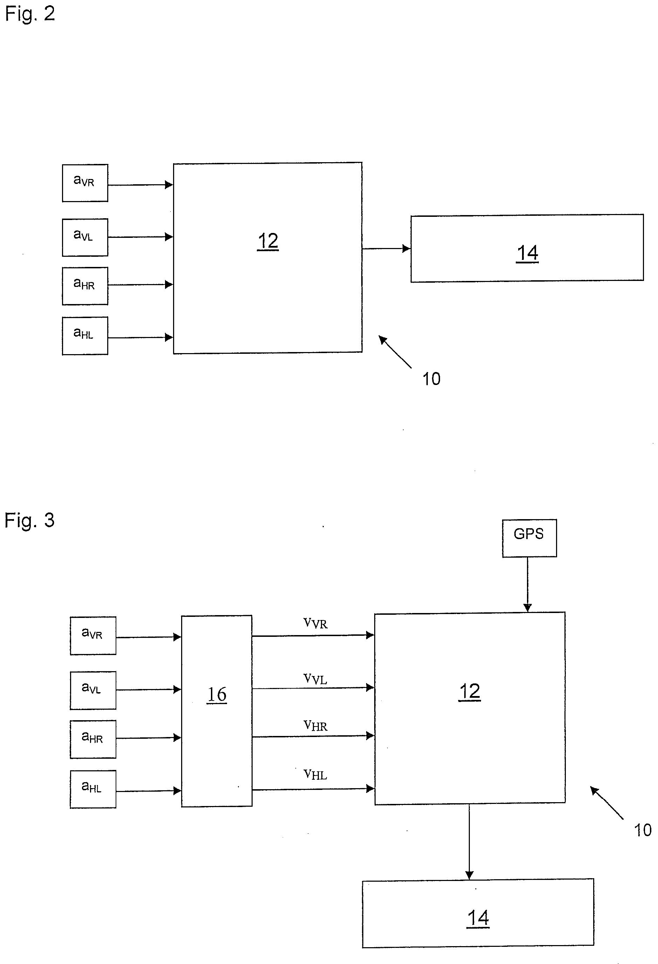

Fig. 2 zeigt, wie das Steuergerät 12 Signale von vier x,y-Beschleunigungssensoren a_{VR}, a_{VL}, a_{HR} und a_{HL} empfängt, die an Positionen vorn rechts, vorn links, hinten rechts bzw. hinten links des Fahrzeugs angeordnet sind. Wie es oben beschrieben ist, kann auf diese Weise eine geradlinige Bewegung von einer nicht-geradlinigen des Fahrzeugs unterschieden werden, wobei einer der zwei vorderen Sensoren und einer der beiden hinteren Sensoren weggelassen werden kann, sie dienen gemäß der Ausführungsform lediglich als Sicherheit. Alternativ kann bei absenkbaren Bussen auf der Ein- und Ausstiegsseite ein z-Beschleunigungssensor angeordnet sein, und die Hinterleuchtung wird auf den Normalmodus eingestellt, wenn durch den z-Beschleunigungssensor ein Absenken zum Bussteig erfasst wird.

Fig. 3 zeigt, wie zwischen die Beschleunigungssensoren a_{VR}, a_{VL}, a_{HR} und a_{HL} ein Integrierglied 16 geschaltet ist, das aus den erfassten Beschleunigungen a_{VR}, a_{VL}, a_{HR} und a_{HL} entsprechende Geschwindigkeiten v_{VR}, v_{VL}, v_{HR} und v_{HL} berechnet, die dann dem Steuergerät 12 zugeführt werden. Das Steuergerät 12 gemäß der Ausführungsform empfängt ferner Signale von einem GPS-Sensor, die die momentane Position des Busses angeben.

In Fig. 4 sind aus Gründen der Übersicht nur zwei Beschleunigungssensoren a_{VR} und a_{HL} gezeigt. Hierbei werden die durch Integration mit dem Integrierglied 16 aus den Beschleunigungssensoren a_{VR} und a_{HL} berechneten Geschwindigkeiten v_{VR} und v_{HL} durch Komparatoren 18 mit Geschwindigkeitswerten verglichen, die von Geschwindigkeitssensoren v_{VR} und v_{HL} erfasst werden, und ein jeweiliger Mittelwert wird an das Steuergerät 12 weitergeleitet.

Die vorliegende Erfindung ist jedoch nicht auf die gezeigten Ausführungsformen begrenzt. Insbesondere können einzelne Elemente der Ausführungsformen beliebig miteinander kombiniert werden, um die Genauigkeit und Zuverlässigkeit des Systems zu erhöhen. So können aus den GPS-Daten (Ortsdaten) mit Hilfe eines Differenziergliedes Geschwindigkeiten und Beschleunigungen berechnet und diese mit Geschwindigkeiten bzw. Beschleunigungen verglichen werden, die von entsprechenden Sensoren ermittelt werden. Ferner können erfasste oder berechnete Ortskoordinaten mit Daten digitaler Karten verglichen werden. Gemäß der Erfindung wird durch Sensoren der Betriebszustand und hier speziell die jeweilige Position des Fahrzeugs erfasst und berechnet und gegebenenfalls mit Signalen von weiteren Sensoren verglichen. Insbesondere in einem Fall, in dem aus erfassten oder berechneten Ortskoordinaten eine Trajektorie erzeugt wird, kann vorteilhafterweise schon eine bestimmte Entfernung vor einer Haltestelle die Fahrzielanzeige in den Normalmodus umgeschaltet werden, also noch bevor die Beschleunigungssensoren entsprechende Signale aussenden. Ferner kann die Dauer zwischen einer Verzögerung und einer anschließenden Beschleunigung erfasst werden und auf der Grundlage der Dauer erfasst werden, ob sich das Fahrzeug z. B. stop-and-go fährt oder angehalten hat.

## Patentansprüche

1. Verfahren zur Steuerung der Leuchtdichte einer Beleuchtungseinrichtung für ein Anzeigeelement einer Anzeigevorrichtung (14) für Fahrzeuge, **dadurch gekennzeichnet, dass** die Leuchtdichte der Beleuchtungseinrichtung in Abhängigkeit von der jeweiligen, aus GPS-Signalen gewonnenen Position des Fahrzeugs geändert wird.

2. Verfahren nach Anspruch 1, **dadurch gekennzeichnet, dass** an vorgegebenen Haltepositionen des Fahrzeugs die Leuchtdichte erhöht und außerhalb dieser vorgegebenen Haltepositionen die Leuchtdichte verringert wird.

3. Verfahren nach Anspruch 2, **dadurch gekennzeichnet, dass** in Abhängigkeit des Abstandes (d_{H}) des Fahrzeugs von den vorgegebenen Haltepositionen die Leuchtdichte bei größer werdendem Abstand (d_{H}) kontinuierlich verringert und bei kleiner werdendem Abstandes (d_{H}) kontinuierlich erhöht wird.

4. Anzeigevorrichtung (14) für Fahrzeuge, mit
einem Anzeigelement,
einer Beleuchtungseinrichtung zur Beleuchtung des Anzeigeelements, und
einer Steuereinrichtung (12) zur Steuerung der Leuchtdichte der Beleuchtungseinrichtung in Abhängigkeit von Daten betreffend die jeweilige, aus GPS-Signalen gewonnene Position des Fahrzeugs.

5. Anzeigevorrichtung (14) nach Anspruch 4, **dadurch gekennzeichnet, dass** die Beleuchtungseinrichtung eine Hinterleuchtungseinrichtung und das Anzeigeelement ein LCD-Anzeigeelement ist.

## Claims

1. Method for controlling the luminance of a lighting device for a display element of a display device (14) for vehicles, **characterized in that** the luminance of the lighting device is changed depending on the respective position of the vehicle obtained from GPS signals.

2. Method according to claim 1, **characterized in that** the luminance is increased at predetermined stop positions of the vehicle and that the luminance is decreased outside of these predetermined stop positions.

3. Method according to claim 2, **characterized in that** depending on the distance (d_{H}) of the vehicle to the predetermined stop positions, the luminance is continuously decreased as the distance (d_{H}) becomes larger, and the luminance is continuously increased as the distance (d_{H}) becomes smaller.

4. Display device (14) for vehicles, comprising
a display element,
a lighting device for illuminating the display element, and
a control device (12) for controlling the luminance of the lighting device depending on data relating to the respective position of the vehicle obtained from GPS signals.

5. Display device (14) according to claim 4, **characterized in that** the lighting device is a backlighting device and the display element is an LCD display element.

## Revendications

1. Procédé pour la commande de la luminance d'un dispositif d'éclairage pour un élément d'affichage d'un dispositif d'affichage (14) pour véhicules, **caractérisé en ce que** la luminance du dispositif d'éclairage est modifiée en fonction de la position respective du véhicule obtenue à partir de signaux GPS.

2. Procédé selon la revendication 1, **caractérisé en ce qu'**à des positions d'arrêt prescrites du véhicule, la luminance est augmentée et en dehors de ces positions d'arrêt prescrites, la luminance est diminuée.

3. Procédé selon la revendication 2, **caractérisé en ce qu'**en fonction de la distance (d_{H}) du véhicule par rapport aux positions d'arrêt prescrites, la luminance est réduite en continu avec l'augmentation de la distance (d_{H}), et est augmentée en continu avec la réduction de la distance (d_{H}).

4. Dispositif d'affichage (14) pour véhicules, avec
un élément d'affichage,
un dispositif d'éclairage pour éclairer l'élément d'affichage, et
un dispositif de commande (12) pour la commande de la luminance du dispositif d'éclairage en fonction de données concernant la position respective du véhicule obtenue à partir de signaux GPS.

5. Dispositif d'affichage (14) selon la revendication 4, **caractérisé en ce que** le dispositif d'éclairage est un dispositif de rétroéclairage, et l'élément d'affichage, un élément d'affichage LCD.
